# FASCICULE DE BREVET EUROPEEN

(11) **EP 4 451 923 B1**
(45) Date de publication et mention de la délivrance du brevet: **08.10.2025**
(21) Numéro de dépôt: 22823127.0
(22) Date de dépôt: 19.12.2022
(51) Int. Cl.: A23P 30/20, A23J 3/26

(54) **FILIÈRE POUR L'EXTRUSION D'UNE MATIÈRE RICHE EN PROTÉINES ET EN EAU, AINSI QUE SYSTÈME DE PRÉPARATION EN CONTINU D'UN PRODUIT ALIMENTAIRE EXTRUDÉ**
DÜSE ZUM EXTRUDIEREN EINES PROTEIN- UND WASSERREICHEN MATERIALS UND SYSTEM ZUR KONTINUIERLICHEN HERSTELLUNG EINES EXTRUDIERTEN LEBENSMITTELPRODUKTS
NOZZLE FOR EXTRUDING A MATERIAL RICH IN PROTEINS AND WATER, AND SYSTEM FOR CONTINUOUS PREPARATION OF AN EXTRUDED FOOD PRODUCT

(30) Priorité: 20.12.2021 FR 2113973
(43) Date de publication de la demande: 30.10.2024
(73) Titulaire: Clextral, 42700 Firminy (FR)
(72) Inventeur: BRUNEL, Sylvie Andrée, 42740 Saint Paul en Jarez (FR); LAVOCAT, Emmanuel, 69600 Oullins (FR); MOTTAZ, Jérôme, 43200 Saint-Maurice de Lignon (FR); SALQUES, Didier Pierre Claude, 42270 Saint-Priest-en-Jarez (FR)
(74) Mandataire: Lavoix
(86) Numéro de dépôt international: PCT/EP2022/086711
(87) Numéro de publication internationale: WO 2023/117945

(56) Documents cités:
- EP-A2- 0 398 315
- WO-A1-2014/151161
- FR-A- 1 232 943

## Description

La présente invention concerne une filière pour l'extrusion d'une matière riche en protéines et en eau. Elle concerne également un système de préparation en continu d'un produit alimentaire extrudé, comprenant une telle filière.

L'invention s'intéresse aux machines d'extrusion comportant un fourreau à l'intérieur duquel une ou plusieurs vis, notamment deux vis, sont entraînées en rotation sur elles-mêmes de sorte qu'elles entraînent une matière à extruder depuis une partie amont du fourreau jusqu'à l'extrémité aval du fourreau où la matière est alors forcée de s'écouler à travers une filière d'extrusion, prévue pour mettre en forme, texturer et/ou fibrer la matière extrudée. Une telle machine d'extrusion applique un traitement thermomécanique à la matière, dans le sens où cette matière subit à la fois une transformation essentiellement mécanique, par mise en pression et par cisaillement par les vis, et une transformation essentiellement thermique, par régulation de la température le long du fourreau.

L'invention concerne plus spécifiquement l'extrusion de matières riches en protéines et en eau, ainsi que les systèmes associés qui permettent de préparer en continu un produit alimentaire extrudé à partir d'une matière première riche en protéines et en eau. Les protéines de la matière première peuvent être d'origine animale et/ou d'origine végétale et/ou d'une autre origine. Dans tous les cas, les protéines sont mélangées avec une proportion importante d'eau, ainsi que, éventuellement, des matières grasses et des additifs, et le mélange correspondant est soumis au traitement thermomécanique qu'applique la machine d'extrusion afin d'être chauffé puis gélifié avant d'être mis en forme dans la filière. La texturation, autrement appelée fibration, du produit alimentaire se produit essentiellement dans la filière de la machine d'extrusion, que la matière sortant du fourreau de cette machine traverse en étant poussée par les vis de la machine. Ce procédé de préparation de produits alimentaires à base de protéines fibrées est connu sous le nom de « CEMH » qui est l'acronyme de l'expression « Cuisson-Extrusion en Milieu Humide », ainsi que sous le nom de « HME » qui est l'acronyme de l'expression anglaise « High Moisture Extrusion ».

WO 03/007729 divulgue un procédé CEMH et une machine d'extrusion associée, dans lesquels une filière est prévue pour refroidir de manière régulée la matière traversant cette filière, en faisant s'écouler la matière dans un unique conduit qui présente à la fois une grande longueur, typiquement de plusieurs mètres, et une section rectangulaire, un profil de température étant appliqué le long de ce conduit par des moyens de thermorégulation ad hoc de manière à diminuer la température de la matière progressivement entre l'entrée et la sortie du conduit. La matière en contact avec la paroi refroidie du conduit tend à adhérer à cette paroi, ce qui permet de cisailler l'écoulement laminaire de matière dans le conduit. Ce cisaillement contribue à développer des lignes de courant au sein de la pâte de matière et tend à aligner des macromolécules dénaturées dans la direction de l'écoulement. En pratique, la maîtrise de la fibration nécessite que le conduit et, par-là, le temps de traitement dans la filière soient longs. De plus, la viscosité de la matière ainsi progressivement fibrée induit que le débit de matière dans le conduit reste modéré.

De son côté, EP 0 398 315 divulgue une installation de fabrication d'un produit fibreux à partir d'une matière première de poisson et de coquillage. Cette installation comporte une extrudeuse comprenant un fourreau et deux vis qui sont entrainées en rotation à l'intérieur du fourreau pour y pousser la matière première. Cette installation comporte également, à la sortie du fourreau, un système de filière, dans lequel la matière sortant du fourreau s'écoule. Ce système de filière comporte, successivement de l'amont vers l'aval, (i) un canal central, qui est aligné avec la sortie du fourreau, (ii) deux tubes de dérivation coudés en arc de cercle, qui s'étendent chacun depuis le canal central, en divergeant l'un de l'autre de l'amont vers l'aval, (iii) deux pompes d'alimentation dont les admissions respectives sont directement raccordées aux sorties respectives des tubes de dérivation, et (iv) deux tubes de refroidissement thermorégulés, dont les extrémités amont sont respectivement connectées directement aux refoulements respectifs des pompes d'alimentation, et dont les extrémités aval respectives débouchent sur l'extérieur. Les tubes de refroidissement délimitent respectivement des conduits rectilignes pour l'écoulement de la matière, qui sont parallèles l'un à l'autre et qui, en partie amont, s'étendent respectivement au travers des pompes d'alimentation, la section transversale de chacun de ces conduits rectilignes étant nécessairement variable au niveau des pompes d'alimentation, de par la présence même de ces pompes d'alimentation. Comme bien expliqué dans EP 0 398 315, le recours aux pompes d'alimentation est une caractéristique essentielle de son enseignement technique : en effet, en agençant les pompes d'alimentation dans la partie amont des conduits rectilignes précités, les pompes d'alimentation sont interposées entre la sortie des tubes de dérivation et l'entrée des tubes de refroidissement afin que l'alimentation en matière des tubes de refroidissement n'utilise pas la force d'extrusion de l'extrudeuse, mais soit réalisée par les pompes d'alimentation. De cette façon, l'alimentation en matière des conduits rectilignes précités est découplée vis-à-vis de la poussée de matière en sortie de l'extrudeuse. Les tubes de refroidissement peuvent ainsi être alimentés en matière de manière maitrisée, en particulier sans intermittences susceptibles d'apparaitre à la sortie de l'extrudeuse.

Ceci étant posé, on notera que, dès lors qu'on cherche à augmenter le débit de matière en sortie d'une filière utilisée avec un procédé CEMH, on se heurte à des difficultés opératoires liées la nature visqueuse de la matière progressant dans la filière et aux contraintes de maîtrise de l'état de fibration de la matière en sortie de la filière. Une approche rudimentaire, qui consiste à utiliser en parallèle plusieurs filières alimentées en entrée par la sortie d'une même machine d'extrusion, n'est pas viable car le coût de l'installation est conséquent et, surtout, la répartition de la matière entre la sortie de la machine d'extrusion et les entrées respectives des filières est difficile à équilibrer et induit des pertes de charge considérables.

Le but de la présente invention est de proposer une nouvelle filière pour l'extrusion d'une matière riche en protéines et en eau, qui, tout en étant économique, permette d'avoir un débit de sortie important sans dégrader la maîtrise de l'état de fibration du produit sortant de la filière.

A cet effet, l'invention a pour objet une filière pour l'extrusion d'une matière riche en protéines et en eau, telle que définie à la revendication 1.

L'invention a également pour objet un système de préparation en continu d'un produit alimentaire extrudé, tel que défini à la revendication 8.

Une des idées à la base de l'invention est de concevoir une filière d'extrusion qui, tout en assurant un bon échange thermique avec la matière qui traverse la filière après y avoir été admise par une seule entrée, répartit la matière de manière homogène dans deux conduits superposés sensiblement parallèles d'où s'échappent deux flux de produit en sortie de la filière, ce qui permet de doubler le débit de matière en sortie en comparaison d'une filière à unique conduit, telle que mentionnée plus haut. A cet effet, l'invention prévoit que, en amont des deux conduits précités dans lesquels l'état de fibration de la matière est contrôlé par thermorégulation, la matière entrant dans la filière est d'abord canalisée dans un canal central de la filière avant d'être répartie dans deux branches de la filière, dont les extrémités amont respectives sont aboutées à l'extrémité aval du canal central et qui divergent l'une de l'autre vers l'aval. L'une de ces deux branches s'étend ainsi du canal central jusqu'à l'extrémité amont d'un des deux conduits précités tandis que l'autre branche s'étend ainsi du canal central jusqu'à l'autre des deux conduits. Le canal central et les deux branches sont thermorégulés et chacune des deux branches est sensiblement rectiligne de son extrémité amont à son extrémité aval, ce qui permet de maîtriser l'écoulement de la matière lors de sa répartition entre les deux conduits, notamment en assurant l'homogénéité de cette répartition et en limitant les pertes de charge. La filière conforme à l'invention permet ainsi de piloter efficacement et finement l'écoulement de matière à fort débit qui traverse cette filière et, par-là, de maîtriser la fibration du produit alimentaire extrudé qui est préparé en continu par le système conforme à l'invention. De par l'agencement du canal central, des deux branches divergentes sensiblement rectilignes et des deux conduits sensiblement parallèles, la filière conforme à l'invention présente un coût de réalisation raisonnable et est compacte comparativement à une solution à deux filières indépendantes utilisées en parallèle. En particulier, la filière conforme à l'invention occupe une emprise au sol qui est similaire à celle d'une filière à unique conduit.

Des caractéristiques additionnelles avantageuses de la filière et/ou du système conformes à l'invention sont spécifiées aux autres revendications.

L'invention sera mieux comprise à la lecture de la description qui va suivre, donnée uniquement à titre d'exemple et faite en se référant aux dessins sur lesquels :
- la figure 1 est une vue en perspective d'un système conforme à l'invention ;
- la figure 2 est une coupe longitudinale dans le plan II de la figure 1 ;
- la figure 3 est une coupe selon la ligne III-III de la figure 2 ;
- la figure 4 est une vue à plus grande échelle du détail encadré IV sur la figure 2, incluant une filière conforme à l'invention ;
- les figures 5, 6 et 7 sont des coupes respectivement selon les lignes V-V, VI-VI et VII-VII de la figure 4 ;
- la figure 8 est une vue en perspective d'une partie seulement du système de la figure 1 ; et
- la figure 9 est également une vue en perspective d'une partie du système de la figure 1, coupée selon le plan II.

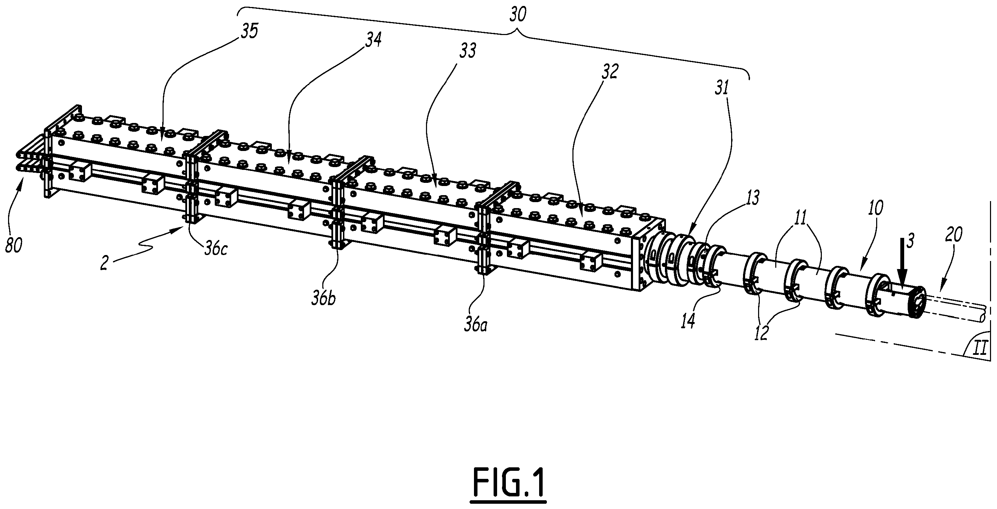

Sur les figures 1 à 9 est représentée de manière schématique un système permettant de préparer en continu, par extrusion, un produit alimentaire 1 destiné à l'alimentation humaine et/ou animale. Ce système comporte principalement une machine d'extrusion 2, détaillée un peu plus bas, et une matière première 3.

La matière première 3 est riche en protéines et en eau. Plus précisément, la matière première 3, c'est-à-dire l'ensemble des ingrédients qui sont traités par la machine d'extrusion 2 pour former le produit alimentaire 1, contient majoritairement, autrement dit à plus de 50% en poids, de l'eau et des protéines, ainsi que, minoritairement voire marginalement, des fibres alimentaires et/ou de l'amidon, ainsi qu'éventuellement des matières grasses et des additifs.

Le produit alimentaire 1, tel qu'il est obtenu en sortie de la machine d'extrusion 2, est texturé, autrement dit fibré. Le produit alimentaire 1 comprend entre 25 et 90% en poids, de préférence entre 50 et 85% en poids, d'eau et comprend également, en poids sur la totalité de la matière sèche, entre 20 et 90% de protéines.

Les protéines de la matière première 3 et donc du produit alimentaire 1 sont d'origine végétale et/ou d'origine animale et/ou d'au moins une autre origine. Les protéines d'origine végétale proviennent par exemple des légumineuses, des céréales et/ou des protéagineux (soja, blé, pois, maïs, pois chiches, lentilles, etc.). Les protéines d'origine animale sont par exemple issues du poisson, de la viande, du lait et/ou des œufs. La ou les autres origines de protéines sont par exemple les champignons, les algues, les insectes, la viande cellulaire, etc.

Le produit alimentaire 1 comprend également, en poids sur la totalité de la matière sèche, entre 0 et 50% de fibres alimentaires et entre 0 et 50% d'amidon, la somme des fibres alimentaires et/ou d'amidon étant préférentiellement supérieure à 0,01%. Les fibres alimentaires sont par exemple des fibres d'origine végétale et l'amidon est par exemple d'origine végétale, à l'état natif, prégélatinisé ou modifié.

Le produit alimentaire 1 peut aussi comprendre, en poids sur la totalité de la matière sèche, entre 0 et 20% de matières grasses, notamment d'origine végétale et/ou animale, et/ou des ingrédients fonctionnels, comme les lécithines, les caséinates ou d'autres ingrédients.

La machine d'extrusion 2 comporte un fourreau 10 de forme allongée, qui s'étend le long d'un axe géométrique X-X et qui est centré sur cet axe. A l'intérieur du fourreau 10, deux vis 20 s'étendent de manière parallèle à l'axe X-X, en étant reçues dans un alésage longitudinal complémentaire du fourreau, centré sur l'axe X-X. Comme bien visible sur les figures 1, 4 et 5, les vis 20 s'étendent de part et d'autre de l'axe X-X, tout en étant interpénétrantes, l'alésage du fourreau 10 présentant ainsi un profil transversal bilobé. En pratique, de manière connue en soi et non détaillée sur les figures, chaque vis 20 inclut par exemple un arbre de vis central sur lequel est monté un ensemble d'éléments de vis.

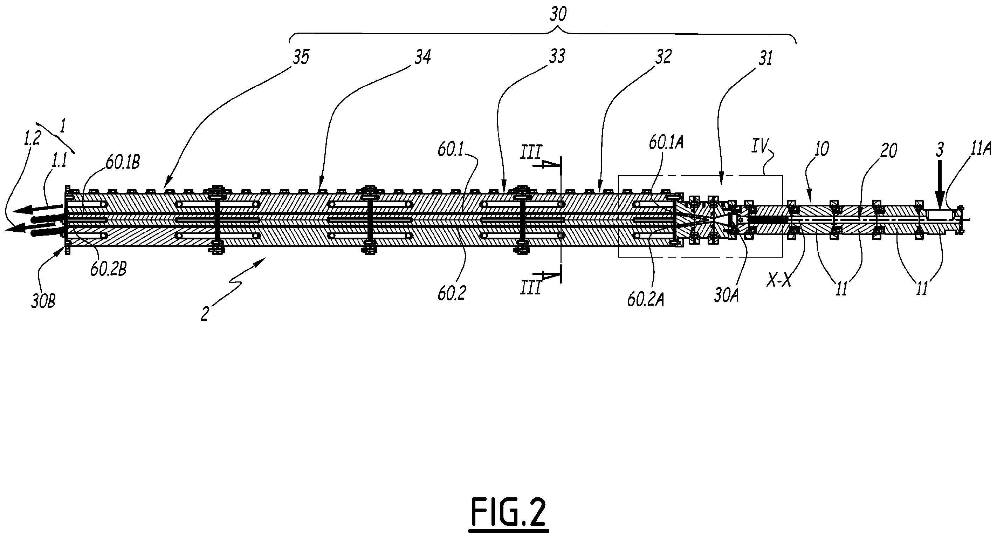

Les vis 20 sont prévues pour être entraînées en rotation sur elles-mêmes, autour de leur axe central, par une unité motrice, non représentée sur les figures, en prise avec l'extrémité amont des vis, à savoir celle de droite sur les figures 1 et 2, émergeant à l'extérieur du fourreau 10.

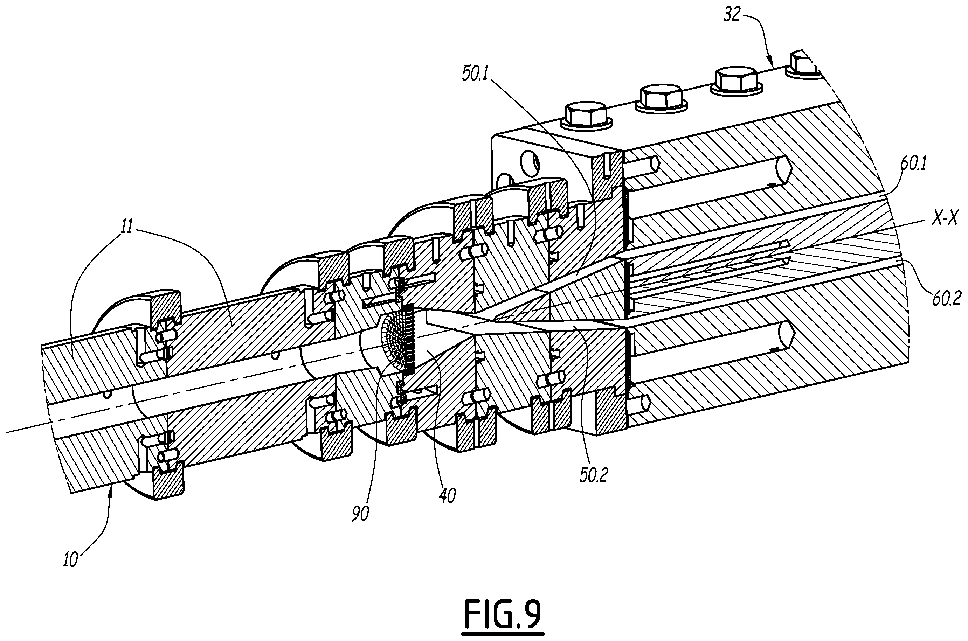

Les vis 20 sont conçues, de par leur profil fileté, pour entraîner la matière première 3 à l'intérieur du fourreau 10 selon l'axe X-X, depuis une partie amont du fourreau 10, dans laquelle les ingrédients de la matière première 3 sont introduits à l'intérieur de l'alésage longitudinal central du fourreau, jusqu'à l'extrémité aval du fourreau 10, les termes « amont » et « aval » étant orientés dans le sens de progression de la matière dans la machine d'extrusion 2 sous l'action des vis 20. Ce sens de progression est de la droite vers la gauche sur les figures 1, 2, 4 et 5 mais est de la gauche vers la droite sur la figure 9 sur laquelle on notera d'ailleurs que les vis 20 ne sont pas dessinées.

Le fourreau 10 comporte plusieurs éléments modulaires 11 se succédant le long de l'axe X-X. Chacun des éléments 11 délimite intérieurement une partie correspondante de l'alésage longitudinal central du fourreau 10, ces parties d'alésage étant dans le prolongement les unes des autres, selon l'axe X-X, à l'état assemblé des éléments 11, comme sur les figures. En pratique, les éléments 11 sont assemblés deux à deux par des colliers de fixation 12.

Dans l'exemple de réalisation considéré sur les figures, l'élément le plus en amont parmi les éléments 11 permet d'introduire, à l'intérieur de sa partie d'alésage central, les ingrédients de la matière première 3. A cet effet, de manière connue en soi et non détaillée ici, cet élément le plus en amont parmi les éléments 11 est pourvu d'un orifice traversant 11A qui, transversalement à l'axe X-X, ouvre sur l'extérieur la partie d'alésage central de cet élément. Plus généralement, on comprend que, parmi les différents éléments 11 du fourreau 10, un ou plusieurs d'entre eux permettent d'introduire, à l'intérieur de l'alésage longitudinal central du fourreau 10, les ingrédients, solides et/ou liquides, de la matière première 3 aux fins de leur traitement par la machine d'extrusion 2.

Comme évoqué dans la partie introductive du présent document, les vis 20 sont conçues pour, en plus d'entraîner la matière à extruder, cisailler et mettre en pression la matière première 3, de manière à la transformer de manière essentiellement mécanique. Cet aspect de la machine d'extrusion 1 étant bien connu dans le domaine, il ne sera pas décrit ici plus avant. De même, également comme évoqué dans la partie introductive, le fourreau 10 est conçu pour réguler la température de la matière à extruder le long du fourreau de façon à transformer cette matière de manière essentiellement thermique. A cet effet, tout ou partie des éléments 11 du fourreau 10 sont thermorégulés et/ou permettent d'injecter dans le fourreau de la vapeur et/ou permettent de dégazer la matière en cours d'extrusion dans le fourreau. Là encore, cet aspect de la machine d'extrusion 1 étant bien connu dans le domaine, il ne sera pas décrit ici plus avant. Plus globalement, le fourreau 10 et les vis 20 sont prévus pour appliquer un traitement thermomécanique à la matière première 3 au fur et à mesure de la progression de cette matière de l'extrémité amont du fourreau jusqu'à l'extrémité aval du fourreau. La matière résultant de ce traitement thermomécanique et sortant du fourreau 10 est référencée 4.

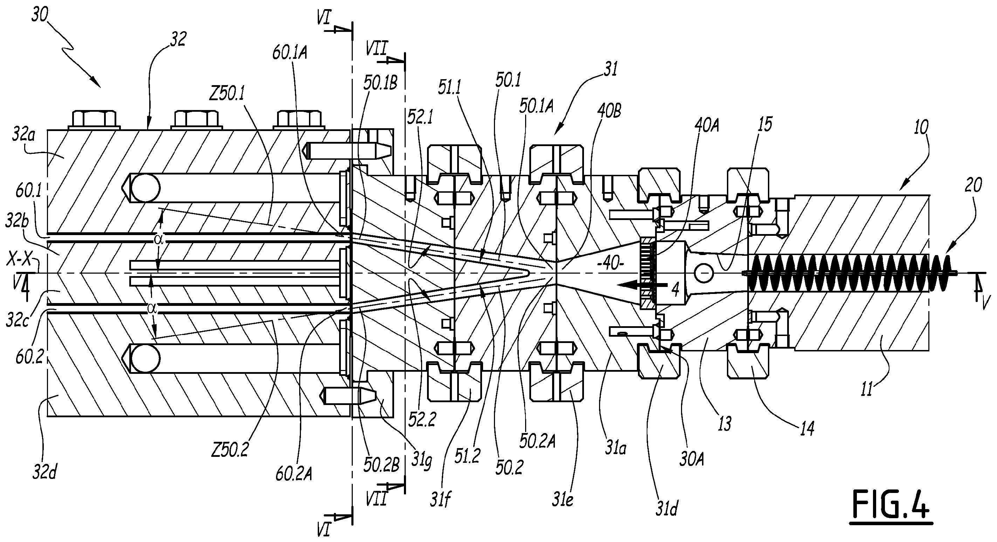

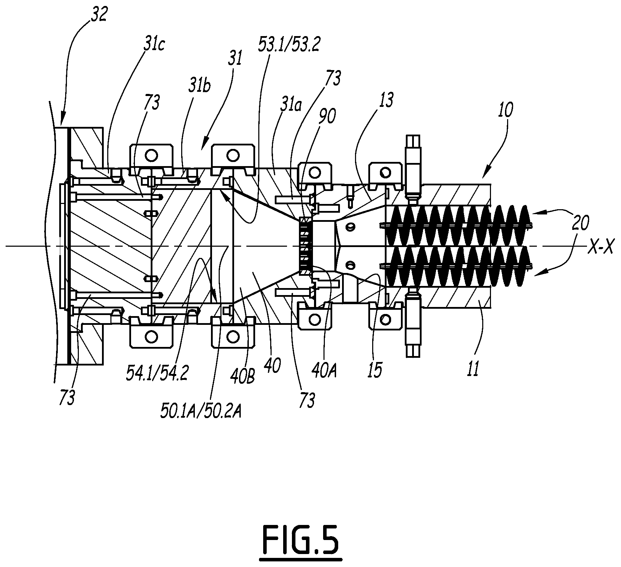

A son extrémité aval, le fourreau 10 comprend une plaque terminale 13, couramment appelée « plaque avant » dans le domaine. La plaque terminale 13 est rapportée fixement, par exemple par un collier de fixation 14, à l'extrémité aval de l'élément le plus en aval, parmi les éléments 11, du fourreau 10. Comme bien visible sur les figures 4 et 5, la plaque terminale 13 délimite intérieurement un alésage 15 traversant, qui est centré sur l'axe X-X, en s'étendant dans le prolongement axial de la partie d'alésage central de l'élément le plus en aval parmi les éléments 11, et qui, le cas échéant, reçoit l'extrémité aval des vis 20. Cet alésage 15 est adapté, notamment de par sa forme, pour canaliser la matière 4 poussée vers l'aval par les vis 20 de manière à assurer une mise en pression et un taux de remplissage appropriés pour l'alésage longitudinal central du fourreau 10. Cet aspect de la machine d'extrusion 2 n'étant pas limitatif de l'invention, il ne sera pas décrit ici plus avant.

La machine d'extrusion 2 comprend également une filière 30 qui, à l'état assemblé de la machine d'extrusion 2, est agencée à l'extrémité aval du fourreau 10, en étant alignée sur l'axe X-X. La filière 30 définit ainsi un axe géométrique, autour et le long duquel la filière 30 est agencée et qui, à l'état assemblé de la machine d'extrusion 2, est confondu avec l'axe X-X de sorte que, par la suite, cet axe géométrique sera considéré comme étant l'axe X-X. La filière 30 est prévue pour être traversée suivant l'axe X-X par la matière 4 aux fins de l'extrusion de cette matière. Suivant l'axe X-X, la filière 30 présente ainsi deux côtés opposés, à savoir un côté amont 30A, par lequel la matière 4 sortant du fourreau 10 entre dans la filière 30 en étant forcée, sous l'action des vis 20, de s'écouler à travers la filière 30, et un côté aval 30B par lequel la matière sort de la filière 30 en formant le produit alimentaire 1.

Dans la forme de réalisation considérée sur les figures, la filière 30 comporte des modules juxtaposés successivement les uns aux autres suivant l'axe X-X depuis le côté amont 30A jusqu'au côté aval 30B de la filière 30, à savoir un module amont 31 et des modules aval, qui sont ici prévus en quatre exemplaires et qui sont respectivement référencés 32, 33, 34 et 35. Chacun des modules amont 31 et aval 32 à 35 présente deux côtés opposés suivant l'axe X-X, à savoir un côté amont et un côté aval. Le côté amont du module amont 31 appartient au côté amont 30A de la filière 30. Le côté aval du module amont 31 est axialement juxtaposé au côté amont du module aval 32. Le côté aval du module aval 32 est axialement juxtaposé au côté amont du module aval 33. Le côté aval du module aval 33 est axialement juxtaposé au côté amont du module aval 34. Le côté aval du module aval 34 est axialement juxtaposé au côté amont du module aval 35. Le côté aval du module aval 35 appartient au côté aval 30B de la filière 30.

Le module amont 31 est conçu pour, successivement suivant l'axe X-X, canaliser suivant cet axe X-X la matière 4 entrant dans le module amont 31 par le côté amont de ce dernier et répartir cette matière en deux flux qui, notamment de manière symétrique, divergent de l'axe X-X vers l'aval jusqu'à atteindre le côté aval du module amont 31 par lequel ces deux flux de matière sortent du module amont 31 de manière distincte l'un de l'autre. Comme décrit plus en détail par la suite, le module amont 31 délimite à cet effet, successivement suivant la direction de l'axe X-X, un canal 40, qui débouche sur le côté amont du module amont 31, et deux branches 50.1 et 50.2, qui s'étendent de manière divergente depuis l'aval du canal 40 jusqu'à déboucher sur le côté aval du module amont 31 de manière distincte l'une de l'autre. Les modules aval 32 à 35 sont, quant à eux, chacun conçus pour y faire s'écouler, depuis le côté amont jusqu'au côté aval du module aval considéré, la matière en deux flux séparés, parallèles à l'axe X-X et situés de part et d'autre de l'axe X-X, qui entrent dans le module aval concerné par le côté amont de ce dernier de manière distincte l'un de l'autre et qui sortent du module aval concerné par le côté aval de ce dernier de manière distincte l'un de l'autre. Le module amont 31 et le module aval 32 sont axialement juxtaposés de manière que les deux flux de matière qui sortent du module amont 31 forment les deux flux de matière qui entrent dans le module aval 32. Les modules aval 32 à 35 sont axialement juxtaposés de manière que les deux flux de matière qui sortent de chacun des modules 32 à 34 forment les deux flux de matière qui entrent respectivement dans les modules 33 à 35 et de manière que les deux flux de matière qui sortent du module aval 35 forment deux flux de produit 1.1 et 1.2, qui sont distincts l'un de l'autre et qui constituent conjointement le produit alimentaire 1. Comme décrit plus en détail par la suite, les modules aval 32 à 35 délimitent à cet effet deux conduits 60.1 et 60.2, qui débouchent sur le côté amont du module aval 32 et qui s'étendent de manière parallèle à l'axe X-X respectivement depuis l'aval des branches 50.1 et 50.2 jusqu'à déboucher sur le côté aval du module aval 35 de manière distincte l'un de l'autre.

Comme bien visible sur les figures 4, 5 et 9, le canal 40 présente une extrémité amont 40A qui débouche sur le côté amont du module amont 31, autrement dit sur le côté amont 30A de la filière 30. A l'état assemblé de la machine d'extrusion 2, l'extrémité amont 40A du canal 40 est aboutée à l'alésage 15 de la plaque terminale 13, plus précisément à l'extrémité aval de cet alésage 15, afin de permettre l'écoulement de la matière 4 entre l'alésage 15 et le canal 40. La section transversale de l'extrémité amont 40A du canal 40, c'est-à-dire la section de cette extrémité amont 40A dans un plan perpendiculaire à l'axe X-X, est avantageusement ajustée à celle de l'extrémité aval de l'alésage 15, notamment pour limiter les pertes de charge ou les perturbations dans l'écoulement de la matière. Dans l'exemple de réalisation considéré sur les figures, cette section transversale de l'extrémité amont 40A du canal 40 présente un contour circulaire, centré sur l'axe X-X.

A l'opposé de son extrémité amont 40A, le canal 40 présente une extrémité aval 40B qui, suivant l'axe X-X, est située dans une région intermédiaire entre les côtés amont et aval du module amont 31. L'extrémité aval 40B du canal 40 est aboutée selon l'axe X-X aux branches 50.1 et 50.2 pour permettre l'écoulement de la matière entre le canal 40 et les branches 50.1 et 50.2. Dans l'exemple de réalisation considéré sur les figures, la section transversale de l'extrémité aval 40B du canal 40 présente un contour rectangulaire, centré sur l'axe X-X.

Comme bien visible sur les figures 4, 5 et 9, le canal 40 s'étend, depuis son extrémité amont 40A jusqu'à son extrémité aval 40B, de manière centrée sur l'axe X-X. En tout point de l'axe X-X entre les extrémités amont 40A et aval 40B du canal 40 incluses, la section transversale du canal 40 est centrée sur l'axe X-X. En pratique, la section transversale du canal 40 varie au fur et à mesure qu'on parcourt l'axe X-X depuis l'extrémité amont 40A jusqu'à l'extrémité aval 40B du canal 40, de manière à accommoder progressivement la différence de forme entre les sections transversales respectives des extrémités amont 40A et aval 40B du canal 40. Le canal 40 permet, lorsque la matière est poussée à travers la filière 30 depuis le côté amont 30A de la filière, de faire s'écouler dans l'axe X-X cette matière depuis l'extrémité amont 40A jusqu'à l'extrémité aval 40B du canal 40, le cas échéant en accommodant progressivement la différence de forme entre les sections transversales respectives de ces extrémités amont 40A et aval 40B.

Egalement comme bien visible sur les figures 4, 5 et 9, chacune des branches 50.1 et 50.2 présente une extrémité amont 50.1A, 50.2A qui, suivant l'axe X-X, est située dans une région intermédiaire entre les côtés amont et aval du module amont 31. Les extrémités amont respectives 50.1A et 50.2A des branches 50.1 et 50.2 sont situées à un même niveau suivant l'axe X-X, en étant disposées de part et d'autre de cet axe X-X. Dans la forme de réalisation considérée sur les figures, ces deux extrémités amont 50.1A et 50.2A communiquent directement l'une avec l'autre transversalement à l'axe X-X ; autrement dit, ces extrémités amont 50.1A et 50.2A ne sont pas matériellement séparées l'une de l'autre, mais sont contigües de part et d'autre de l'axe X-X. Dans tous les cas, les extrémités amont 50.1A et 50.2A des branches 50.1 et 50.2 sont aboutées suivant l'axe X-X à l'extrémité aval 40B du canal 40 pour permettre l'écoulement de la matière entre le canal 40 et les branches 50.1 et 50.2. La section transversale des extrémités amont 50.1A et 50.2A, prises conjointement, des branches 50.1 et 50.2 est avantageusement ajustée à la section transversale de l'extrémité aval 40B du canal 40, notamment pour limiter les pertes de charge ou les perturbations dans l'écoulement de la matière. Dans l'exemple de réalisation considéré sur les figures, cette section transversale des extrémités amont 50.1A et 50.2A prises conjointement présente ainsi le même contour rectangulaire, centré sur l'axe X-X, que la section transversale de l'extrémité aval 40B du canal 40.

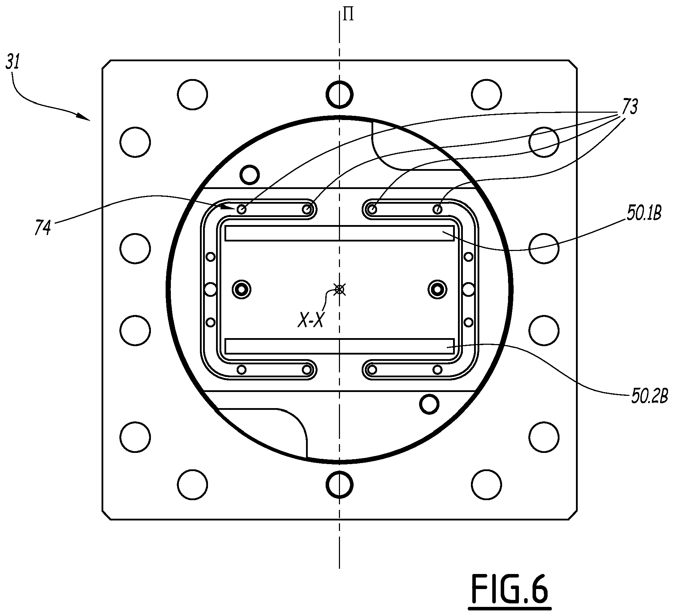

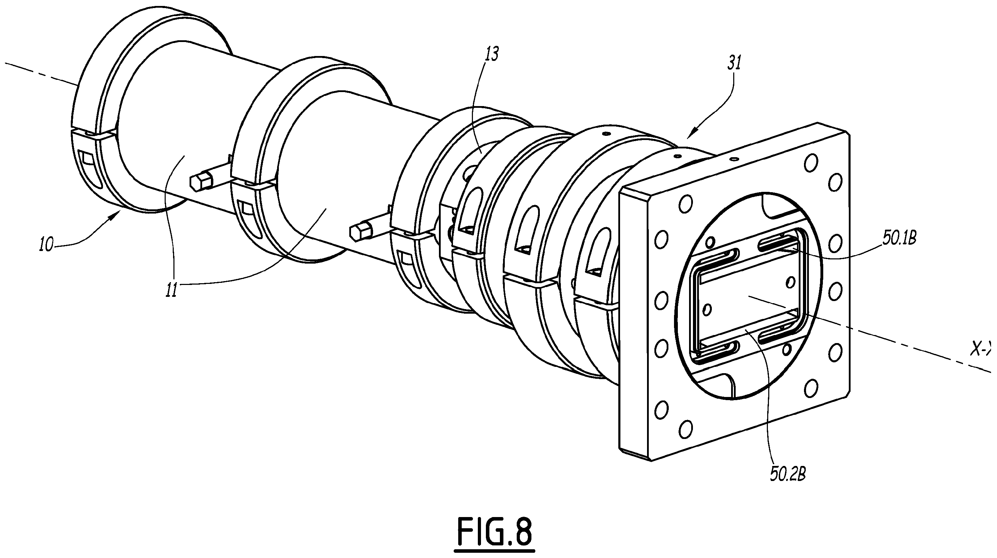

A l'opposé de leur extrémité amont 50.1A, 50.2A, les branches 50.1 et 50.2 présentent chacune une extrémité aval 50.1B, 50.2B. Ces deux extrémités aval 50.1B et 50.2B débouchent de manière distincte sur le côté aval du module amont 31, comme bien visible sur les figures 6 et 8. A l'état assemblé de la machine d'extrusion 2, en particulier à l'état assemblé de la filière 30, l'extrémité aval 50.1B de la branche 50.1 est aboutée selon l'axe X-X au conduit 60.1 pour permettre l'écoulement de la matière entre la branche 50.1 et le conduit 60.1 tandis que l'extrémité aval 50.2B de la branche 50.2 est aboutée selon l'axe X-X au conduit 60.2 pour permettre l'écoulement de la matière entre la branche 50.2 et le conduit 60.2.

Comme bien visible sur les figures 4, 5, 7 et 9, les branches 50.1 et 50.2 s'étendent depuis leur extrémité amont 50.1A et 50.2A jusqu'à leur extrémité aval 50.1B et 50.2B à la fois de manière rectiligne et de part et d'autre de l'axe X-X en divergeant l'une de l'autre. Ainsi, lorsqu'on parcourt l'axe X-X depuis le niveau où sont situées les extrémités amont 50.1A et 50.2A des branches 50.1 et 50.2 jusqu'au niveau où sont situées les extrémités aval 50.1B et 50.2B des branches 50.1 et 50.2, les branches 50.1 et 50.2 s'éloignent progressivement l'une de l'autre de part et d'autre de l'axe X-X, l'accroissement de cet éloignement entre les branches 50.1 et 50.2 étant constant. Les branches 50.1 et 50.2 permettent, lorsque la matière est poussée à travers la filière 30 depuis le côté amont 30A de la filière, de répartir cette matière en deux flux distincts qui s'écoulent dans les branches 50.1 et 50.2 depuis les extrémités amont respectives 50.1A et 50.2A jusqu'aux extrémités aval respectives 50.1B et 50.2B de ces branches. La rectitude des branches 50.1 et 50.2 tend à équilibrer cette répartition de la matière entre les deux flux précités, en permettant aux deux flux de s'écouler en ligne droite depuis l'extrémité aval 40B du canal 40 jusqu'aux conduits 60.1 et 60.2. Ainsi, les deux flux précités s'écoulent dans les branches 50.1 et 50.2 depuis leur extrémité amont 50.1A et 50.2A jusqu'au leur extrémité aval 50.1B et 50.2B dans une direction qui est inclinée par rapport à l'axe X-X sous un angle d'inclinaison constant. En évitant que l'inclinaison de cette direction d'écoulement ne soit modifiée entre le canal 40 et les conduits 60.1 et 60.2, on limite les perturbations dans l'écoulement de la matière, ainsi que les pertes de charge.

Suivant un mode de réalisation pratique et performant, qui est mis en oeuvre dans l'exemple de réalisation considéré sur les figures, les branches 50.1B et 50.2B s'étendent, depuis leur extrémité amont 50.1A et 50.2A à leur extrémité aval 50.1B et 50.2B, de manière symétrique de part et d'autre de l'axe X-X, voire sont symétriques l'une de l'autre par rapport à l'axe X-X. Cette disposition permet de répartir la matière poussée à travers la filière 30 de manière homogène entre les branches 50.1 et 50.2.

Dans la forme de réalisation considérée sur les figures, la rectitude des branches 50.1 et 50.2 résulte du fait que ces branches 50.1 et 50.2 sont délimitées par à la fois :
- des surfaces planes respectives 51.1 et 51.2 du module amont 31, qui sont toutes les deux perpendiculaires à un même plan géométrique π contenant l'axe X-X et qui sont situées de part et d'autre de l'axe X-X, en étant chacune tournées à l'opposé de l'axe X-X, ces deux surfaces 51.1 et 51.2 s'étendant depuis les extrémités amont respectives 50.1A et 50.2A jusqu'aux extrémités aval respectives 50.1B et 50.2B des branches 50.1 et 50.2 en divergeant l'une de l'autre, notamment de manière symétrique par rapport à l'axe X-X, et
- des surfaces planes respectives 52.1 et 52.2 du module amont 31, qui sont toutes les deux perpendiculaires au plan géométrique π et qui sont situées de part et d'autre de l'axe X-X, en étant chacune tournées vers l'axe X-X, ces deux surfaces planes 52.1 et 52.2 s'étendant depuis les extrémités amont respectives 50.1A et 50.2A jusqu'aux extrémités aval respectives 50.1B et 50.2B des branches 50.1 et 50.2 en divergeant l'une de l'autre, notamment de manière symétrique par rapport à l'axe X-X.

On notera que le plan géométrique π correspond au plan de coupe des figures 2, 4 et 9. De par leur conformation plate sur toute l'étendue axiale des branches 50.1 et 50.2, les surfaces planes 51.1 et 52.1 de la branche 50.1 canalisent l'écoulement de matière dans cette branche 50.1 en ligne droite du canal 40 au conduit 60.1 et les surfaces planes 51.2 et 52.2 de la branche 50.2 canalisent l'écoulement de matière dans cette branche 50.2 en ligne droite depuis le canal 40 jusqu'au conduit 60.2. Au niveau des extrémités amont 50.1A et 50.2A des branches 50.1 et 50.2, les surfaces planes 52.1 et 52.2 sont séparées l'une de l'autre, en formant, dans l'exemple considéré ici, les bords longitudinaux opposés du contour rectangulaire que présente la section transversale de ces extrémités amont 50.1A et 50.2A prises conjointement, tandis que les surfaces planes 51.1 et 51.2 se rejoignent en formant entre elles un prisme de divergence.

Dans l'exemple de réalisation considéré sur les figures, les surfaces planes 51.1 et 52.1 de la branche 50.1 sont sensiblement parallèles l'une à l'autre et, par symétrie par rapport à l'axe X-X, les surfaces planes 51.2 et 52.2 de la branche 50.2 sont sensiblement parallèles entre elles. Les surfaces 51.1, 51.2, 52.1 et 52.2 sont ainsi toutes inclinées par rapport à l'axe X-X avec sensiblement un même angle, noté α sur la figure 4. Suivant un dimensionnement préférentiel permettant de maîtriser davantage l'écoulement de la matière dans les branches 50.1 et 50.2, notamment en limitant les turbulences dans cet écoulement, l'angle α est inférieur à 30°, voire inférieur à 20°, voire inférieur à 15°, voire inférieur à 12°, voire inférieur à 10°, voire inférieur à 8°, voire inférieur à 5° : en limitant l'inclinaison des surfaces planes 51.1, 51.2, 52.1 et 52.2 par rapport à l'axe X-X, on permet à la matière de s'écouler depuis le canal 40 jusqu'aux conduits 60.1 et 60.2 en lui évitant une trop forte déflexion qui risquerait de perturber la stabilité des écoulements de matière dans les branches 50.1 et 50.2. Ceci étant, à titre de variantes non représentées, les surfaces planes 51.1 et 52.1 de la branche 50.1 peuvent être prévues non parallèles entre elles et les surfaces planes 51.2 et 52.2 de la branche 50.2 peuvent également être prévues non parallèles entre elles, étant remarqué que les angles avec lesquels les surfaces planes 51.1, 51.2, 52.1 et 52.2 sont respectivement inclinées par rapport à l'axe X-X respectent avantageusement le dimensionnement préférentiel précité ; en particulier, les surfaces planes 51.1 et 52.1 de la branche 50.1 peuvent ainsi être prévues convergentes l'une vis-à-vis de l'autre vers l'aval et les surfaces planes 51.2 et 52.2 de la branche 50.2 peuvent également être prévues convergentes l'une vis-à-vis de l'autre vers l'aval.

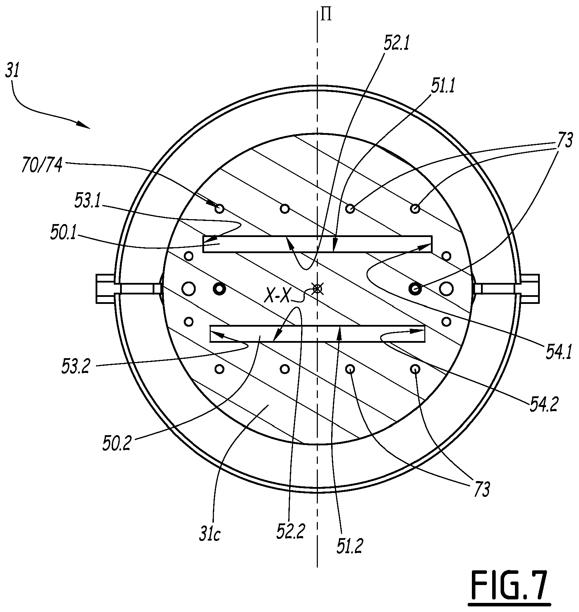

Dans tous les cas, suivant une forme de réalisation avantageuse qui est mise en oeuvre dans l'exemple considéré sur les figures, chacune des branches 50.1 et 50.2 est également délimitée par des surfaces 53.1 et 54.1, respectivement 53.2 et 54.2, du module amont 31 : comme bien visible sur les figures 5 et 7, ces surfaces planes 53.1 et 54.1 pour la branche 50.1, respectivement 53.2 et 54.2 pour la branche 50.2, sont situées de part et d'autre de l'axe X-X, en s'étendant chacune depuis l'extrémité amont 50.1A jusqu'à l'extrémité aval 50.1B de la branche 50.1, respectivement depuis l'extrémité amont 50.2A jusqu'à l'extrémité aval 50.2B de la branche 50.2. Dans l'exemple considéré sur les figures, ces surfaces planes 53.1 et 54.1 pour la branche 50.1, respectivement 53.2 et 54.2 pour la branche 50.2, sont toutes les deux planes, en étant parallèles au plan géométrique π. Il en résulte que chaque branche 50.1, 50.2 présente, en tout plan perpendiculaire à l'axe X-X entre les extrémités amont 50.1A, 50.2A et aval 50.1B, 50.2B de la branche, une section ayant un contour rectangulaire, dont les bords longitudinaux opposés correspondent aux surfaces planes 51.1 et 52.1, respectivement 51.2 et 52.2, et dont les bords de largeur opposés correspondent aux surfaces planes 53.1 et 54.1, respectivement 53.2 et 54.2, ce contour rectangulaire ayant une dimension longitudinale constante sur toute l'étendue axiale de la branche 50.1, 50.2. Ainsi, sur toute l'étendue axiale de chacune des branches 50.1 et 50.2, la branche présente une dimension, prise orthogonalement au plan géométrique π, qui est constante et qui est avantageusement égale à la dimension correspondante de la section transversale de l'extrémité aval 40B du canal 40, ce qui tend à ce que l'écoulement de la matière dans les branches 50.1 et 50.2 soit totalement orienté parallèlement au plan géométrique π, en particulier sans que cet écoulement ne présente de composante transversale substantielle. En variante non-représentée, les surfaces planes 53.1 et 54.1 pour la branche 50.1, respectivement 53.2 et 54.2 pour la branche 50.2, peuvent être arrondies au niveau de leur jonction avec les surfaces planes 51.1 et 52.1, respectivement 51.2 et 52.2., conférant au contour précité une forme rectangulaire à coins arrondis. Selon encore une autre variante non-représentée, les surfaces 53.1 et 54.1 pour la branche 50.1, respectivement 53.2 et 54.2 pour la branche 50.2, peuvent être concaves de leur jonction avec la surface plane 51.1 jusqu'à leur jonction avec la surface 52.1, respectivement de leur jonction avec la surface plane 51.2 jusqu'à leur jonction avec la surface plane 52.2, conférant alors au contour précité une forme oblongue.

Dans le prolongement des considérations qui précèdent, mais en généralisant ces dernières, on notera que la rectitude des branches 50.1 et 50.2 et, le cas échéant, leur faible inclinaison par rapport à l'axe X-X n'obligent pas nécessairement à recourir aux surfaces planes 51.1, 51.2, 52.1 et 52.2 présentées en détail plus haut. En effet, à titre de variantes non représentées, il est envisageable de délimiter les branches 50.1 et 50.2 par des surfaces du module amont 31, présentant d'autres géométries que celle des surfaces planes 51.1, 51.2, 52.1 et 52.2 du moment que ces surfaces assurent à la fois la rectitude des branches 50.1 et 50.2 depuis leur extrémité amont 50.1A, 50.2A jusqu'à leur extrémité aval 50.1B, 50.2B et, le cas échéant, la faible inclinaison de la direction rectiligne correspondante de chacune des branches, et ce afin que la matière s'écoule dans les branches, depuis le canal 40 jusqu'aux conduits 60.1 et 60.2, de manière maîtrisée, en particulier en limitant les turbulences et les pertes de charge. Ainsi, suivant une disposition préférentielle généralisant la description plus haut en lien avec les surfaces planes 51.1, 51.2, 52.1 et 52.2, chaque branche 50.1, 50.2 est conçue pour présenter, depuis son extrémité amont 50.1A, 50.2A jusqu'à son extrémité aval 50.1B, 50.2B, une succession de sections dans des plans respectifs perpendiculaires à l'axe X-X, ces sections définissant des centres respectifs dont l'union forme un axe de branche Z50.1, Z50.2, qui est rectiligne et qui forme avec l'axe X-X un angle inférieur à 30°, voire inférieur à 20°, voire inférieur à 15°, voire inférieur à 12°, voire inférieur à 10°, voire inférieur à 8°, voire inférieur à 5°. Appliquée à la forme de réalisation qui est envisagée sur les figures et qui a été décrite en détail ci-dessus, cette disposition se traduit par le fait que, d'une part, l'axe de branche Z50.1, Z50.2 correspond à la droite passant par les centres respectifs des contours rectangulaires des sections que présente la branche correspondante 50.1, 50.2 en tout plan perpendiculaire à l'axe X-X sur toute l'étendue axiale de la branche et, d'autre part, l'angle formé entre l'axe de branche Z50.1, Z50.2 et l'axe X-X correspond à l'angle α.

Quelle que soit la spécificité des branches 50.1 et 50.2, un dimensionnement préférentiel relatif à la section de ces branches consiste à prévoir que la section cumulée des branches 50.1 et 50.2 dans un plan à la fois perpendiculaire à l'axe X-X et situé au niveau des extrémités distales respectives 50.1B et 50.2B des branches est égale ou inférieure à (i) la section cumulée des branches en tout plan à la fois perpendiculaire à l'axe X-X et situé en amont des extrémités distales respectives 50.1B et 50.2B des branches et (ii) la section du canal 40 en tout plan à la fois perpendiculaire à l'axe X-X et situé entre les extrémités amont 40A et aval 40B du canal 40. De cette façon, lorsque la matière est poussée à travers la filière 30, l'écoulement de matière dans le canal 40 et dans les branches 50.1 et 50.2 n'est pas perturbé et s'effectue de façon contrôlée.

En pratique, le module amont 31 présente une structure constitutive qui n'est pas limitative du moment qu'elle permet à la fois d'assembler le module amont 31 au sein de la machine d'extrusion 2 et de délimiter à la fois le canal 40 et les branches 50.1 et 50.2, et ce notamment quelles que soient les spécificités de ce canal et de ces branches. Dans l'exemple de réalisation considéré sur les figures, le module amont 31 comporte à cet effet trois éléments juxtaposés successivement les uns aux autres suivant l'axe X-X, depuis le côté amont jusqu'au côté aval du module amont 31, à savoir un élément 31a, qui, à lui seul, délimite sensiblement l'intégralité du canal 40, et des éléments 31b et 31c, qui, conjointement, délimitent sensiblement l'intégralité des branches 50.1 et 50.2. L'élément 31a est assemblé fixement à la plaque terminale 13, par exemple par un collier de fixation 31d. Les éléments 31a, 31b et 31c sont assemblés fixement les uns aux autres, notamment deux à deux par, par exemple, des colliers de fixation 31e et 31f. L'élément 31c est assemblé fixement au module aval 32, par exemple par une bride de fixation 31g. Un des intérêts de cette structure à plusieurs éléments axialement juxtaposés est relatif à la fabrication du module amont 31. Un autre intérêt de cette structure à plusieurs éléments pour le module amont 31 apparaîtra plus loin. En pratique, le nombre des éléments de cette structure à plusieurs éléments n'est pas limité à trois, mais pourrait être supérieur à trois ou égal à deux. En alternative non représentée, le module amont peut également présenter une structure monobloc quant à sa partie délimitant à la fois le canal 40 et les branches 50.1 et 50.2. Dans tous les cas, on notera que, notamment pour des raisons liées à la structure constitutive du module amont 31, l'angle α associée à chacune des branches 50.1, 50.2 peut ne pas être rigoureusement constant toute l'étendue axiale de la branche, mais n'être que sensiblement constant, en variant légèrement, typiquement dans des proportions liées aux jeux de fabrication et d'assemblage. De même, chacune des surfaces planes 51.1, 51.2, 52.1 et 52.2 peut présenter une planéité non rigoureusement homogène sur toute l'étendue axiale de la branche concernée.

On va maintenant décrire plus en détail les conduits 60.1 et 60.2. Comme indiqué plus haut, ces conduits 60.1 et 60.2 sont délimités par les modules aval 32, 33, 34 et 35 : plus précisément, les modules aval 32 à 35 délimitent des parties respectives, se succédant suivant l'axe X-X, du conduit 60.1 et délimitent également des parties respectives, se succédant suivant l'axe X-X, du conduit 60.2.

Comme bien visible sur les figures 2, 4 et 9, chacun des conduits 60.1 et 60.2 présente une extrémité amont 60.1A, 60.2A qui débouche sur le côté amont du module aval 32. A l'état assemblé de la machine d'extrusion 2, en particulier à l'état assemblé de la filière 30, l'extrémité amont 60.1A du conduit 60.1 est aboutée selon l'axe X-X à l'extrémité aval 50.1B de la branche 50.1 pour permettre l'écoulement de la matière entre la branche 50.1 et le conduit 60.1 tandis que l'extrémité amont 60.2A du conduit 60.2 est aboutée selon l'axe X-X à l'extrémité aval 50.2B de la branche 50.2 pour permettre l'écoulement de la matière entre la branche 50.2 et le conduit 60.2. La section transversale de l'extrémité amont 60.1A du conduit 60.1 est avantageusement ajustée à la section, dans un plan perpendiculaire à l'axe X-X, de l'extrémité aval 50.1B de la branche 50.1, tandis que la section transversale de l'extrémité amont 60.2A du conduit 60.2 est avantageusement ajustée à la section, dans un plan perpendiculaire à l'axe X-X, de l'extrémité aval 50.2B de la branche 50.2, notamment pour limiter les pertes de charge ou les perturbations dans l'écoulement de la matière entre la branche 50.1 et le conduit 60.1 et entre la branche 50.2 et le conduit 60.2.

Comme bien visible sur la figure 2, chacun des conduits 60.1 et 60.2 présente, à l'opposé de son extrémité amont 60.1A, 60.2A, une extrémité aval 60.1B, 60.2B. Ces deux extrémités aval 60.1B et 60.2B débouchent de manière distincte sur le côté aval du module aval 35, autrement dit sur le côté aval 30B de la filière 30.

Comme bien visible sur les figures 2, 4 et 9, les conduits 60.1 et 60.2 s'étendent, depuis leur extrémité amont 60.1A, 60.2A jusqu'à leur extrémité aval 60.1B, 60.2B, de part et d'autre de l'axe X-X et de manière sensiblement parallèle à cet axe X-X. Les conduits 60.1 et 60.2 permettent, lorsque la matière est poussée à travers la filière 30 depuis le côté amont 30A de cette filière, de faire s'écouler cette matière parallèlement à l'axe X-X sous forme de deux flux de matière distincts, dont l'un sort de la branche 50.1 et progresse dans le conduit 60.1 depuis l'extrémité amont 60.1A jusqu'à l'extrémité aval 60.1B de ce conduit 60.1, tandis que l'autre de ces deux flux de matière sort de la branche 50.2 et progresse dans le conduit 60.2 depuis l'extrémité amont 60.2A jusqu'à l'extrémité aval 60.2B de ce conduit 60.2.

Suivant un mode de réalisation pratique et performant, qui est mis en oeuvre dans l'exemple de réalisation considéré sur les figures, les conduits 60.1 et 60.2 s'étendent, depuis leur extrémité amont 60.1A et 60.2A jusqu'à leur extrémité aval 60.1B et 60.2B, de manière symétrique de part et d'autre de l'axe X-X, voire sont symétriques l'un de l'autre par rapport à l'axe X-X. Cette disposition permet notamment d'homogénéiser l'écoulement de la matière à travers la filière 30 entre les conduits 60.1 et 60.2.

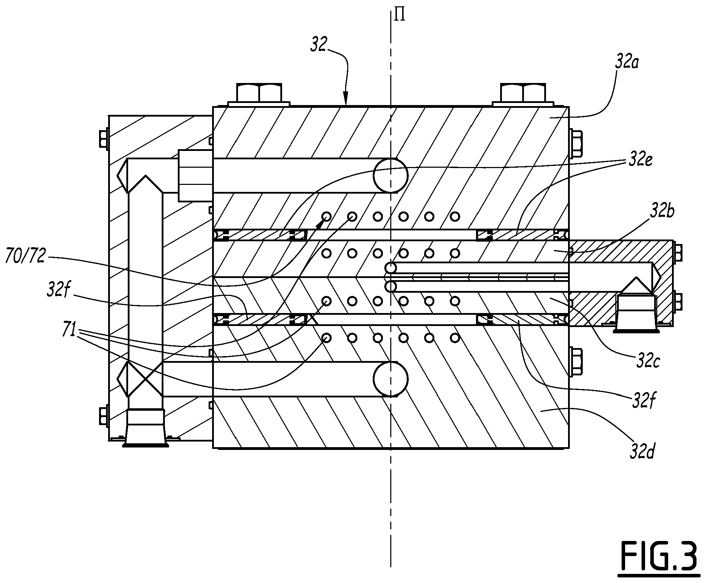

Dans la forme de réalisation considérée sur les figures, la section transversale de chacun des conduits 60.1 et 60.2 est constante entre les extrémités amont 60.1A, 60.2A et aval 60.1B, 60.2B du conduit. Comme bien visible sur la figure 3, cette section transversale des conduits 60.1 et 60.2 présente un contour rectangulaire dont les bords longitudinaux s'étendent perpendiculairement au plan géométrique π. Ici, ce contour rectangulaire est ajusté sur celui de la section, dans un plan perpendiculaire à l'axe X-X, des extrémités aval 50.1B et 50.2B des branches 50.1 et 50.2. Cette conformation rectangulaire du contour de la section transversale des conduits 60.1 et 60.2 induit que les flux de produit 1.1 et 1.2 se présentent chacun sous la forme d'une bande sensiblement parallélépipédique, à section transversale rectangulaire. Suivant un dimensionnement préférentiel qui est directement en lien avec l'épaisseur des bandes formant respectivement les flux de produit 1.1 et 1.2, le contour rectangulaire de la section transversale de chacun des conduits 60.1 et 60.2 présente une largeur comprise entre 4 et 25 mm, de préférence entre 6 et 20 mm. Suivant des considérations similaires à celles développées plus haut concernant des variantes possibles pour le contour de la section de chacune des branches 50.1 et 50.2, le contour de la section transversale de chacun des conduits 60.1 et 60.2 peut, en variante non représentée, être rectangulaire à coins arrondis ou bien être oblong. Ceci étant dit, également en variantes non représentées, d'autres formes géométriques sont envisageables pour le contour de la section transversale des conduits 60.1 et 60.2, étant remarqué que la géométrie retenue pour ce contour induit la forme géométrique des flux de produit 1.1 et 1.2.

En pratique, les modules aval 32 à 35 présentent chacun une structure constitutive qui n'est pas limitative du moment que les structures respectives des modules aval 32 à 35 permettent à la fois d'assembler ces modules aval au sein de la machine d'extrusion 2 et de délimiter les conduits 60.1 et 60.2, et ce notamment quelles que soient les spécificités de ces conduits 60.1 et 60.2. Dans tous les cas, les structures respectives des modules aval 32 à 35 permettent notamment d'assembler fixement ces modules les uns aux autres, en particulier en les assemblant deux à deux par, par exemple, des brides de fixation 36a, 36b et 36c. Suivant une disposition particulièrement avantageuse pour des raisons économiques et pratiques, les modules aval 32 à 35 sont individuellement identiques les uns aux autres, en présentant ainsi une même structure constitutive qui est répétée pour chacun des modules aval 32 à 35, comme dans l'exemple envisagé sur les figures.

De plus, une forme préférentielle pour cette structure consiste à ce que chaque module aval 32, 33, 34, 35 comporte deux paires superposées de blocs superposés, avec interposition entre deux blocs de chaque paire d'une paire d'entretoises de manière à ce que les conduits 60.1 et 60.2 soient définis conjointement par ces blocs et ces entretoises. Plus précisément, comme illustré pour le module aval 32 sur la figure 3, ce module aval 32 comporte des blocs 32a, 32b, 32c et 32d, ainsi qu'une paire d'entretoises 32e et une paire d'entretoises 32f : les entretoises 32e sont interposées entre les blocs superposés adjacents 32a et 32b de manière que ces blocs 32a et 32b et les entretoises 32e définissent conjointement le conduit 60.1 au niveau du module aval 32, tandis que les entretoises 32f sont interposées entre les blocs superposés adjacents 32c et 32d de manière que ces blocs 32c et 32d et les entretoises 32f définissent conjointement le conduit 60.2 au niveau du module aval 32. Les blocs 32a, 32b,32c et 32d et les entretoises 32e et 32f sont assemblés fixement les uns aux autres, par exemple par boulonnage. Un des intérêts de cette structure à blocs et à entretoises est relatif à la fabrication des modules aval 32 à 35 : en particulier, en jouant sur les dimensions des entretoises 32e et 32f, on modifie facilement les dimensions de la section transversale des conduits 60.1 et 60.2, par exemple les valeurs de largeur et de longueur du contour rectangulaire de la section transversale des conduits 60.1 et 60.2 illustrés aux figures. Un autre intérêt de cette structure à blocs pour les modules aval 32 à 35 apparaîtra plus loin. En variante non représentée, chaque module aval 32 à 35 est dépourvu d'entretoises, telles que les entretoises 32e et 32f, mais au moins certains de ses blocs présentent une section transversale à profil en U : par exemple, les blocs 32a et 32d sont similaires à ceux montrés aux figures, mais le bloc 32b présente une section transversale à profil en U tourné vers le bloc 32a et le bloc 32c présente une section transversale à profil en U tourné vers le bloc 32d. Selon encore une autre variante non représentée, les blocs 32b et 32c sont réalisés sous forme d'une seule et même pièce, ce qui revient que la structure de chaque module aval 32 à 35 inclut non pas quatre blocs superposés, comme illustré sur les figures, mais uniquement trois blocs superposés, le bloc intermédiaire servant, d'un côté, à définir le conduit 60.1 tandis que le côté opposé de ce bloc intermédiaire sert à définir le conduit 60.2 ; dans ce cas, il est envisageable soit de prévoir des entretoises similaires aux entretoises 32e et 32f, soit de ne pas prévoir de telles entretoises et de prévoir que la section transversale du bloc intermédiaire est en forme de H et/ou que la section transversale des deux autres blocs est en U.

Quelles que soient les spécificités du canal 40, des branches 50.1 et 50.2 et des conduits 60.1 et 60.2, la filière 30 est thermorégulée dans le sens où la filière 30 est conçue pour commander sa température de manière à, au moins localement, maintenir cette température à une valeur déterminée, avantageusement réglable, malgré les échanges thermiques avec son environnement immédiat. En particulier, la filière 30 est capable d'agir (i) sur la température dans les conduits 60.1 et 60.2, plus précisément sur la température de la matière s'écoulant dans ces conduits 60.1 et 60.2, moyennant un échange thermique entre cette matière et les modules aval 32 à 35 au travers de la paroi des conduits 60.1 et 60.2, (ii) sur la température dans les branches 50.1 et 50.2, plus précisément sur la température de la matière s'écoulant dans ces branches 50.1 et 50.2, moyennant un échange thermique entre cette matière et le module amont 31 au travers de la paroi des branches 50.1 et 50.2, et (iii) sur la température dans le canal 40, plus précisément sur la température de la matière s'écoulant dans ce canal 40, moyennant un échange thermique entre cette matière et le module amont 31 au travers de la paroi du canal 40.

A cet effet, la filière 30 est équipée de moyens de thermorégulation 70 adaptés pour commander la température de paroi des conduits 60.1 et 60.2 et pour commander la température de paroi des branches 50.1 et 50.2, ainsi que pour commander la température de paroi du canal 40. Une forme de réalisation pour ces moyens de thermorégulation 70, qui est mise en oeuvre dans l'exemple illustré aux figures, est détaillée ci-dessous.

Chacun des modules aval 32 à 35 est pourvu de passages 71 pour la circulation d'un fluide thermorégulateur, par exemple de l'eau sous pression. Les passages 71 sont situés dans la paroi des conduits 60.1 et 60.2, en étant avantageusement intégrés directement dans les blocs précités appartenant aux modules aval 32 à 35, tels que les blocs 32a, 32b, 32c et 32d pour le module aval 32, comme bien visible sur la figure 3, les blocs précités étant alors prévus thermoconducteurs. Les passages 71 permettent de faire circuler un fluide thermorégulateur qui, par échange thermique avec la paroi des conduits 60.1 et 60.2, commande la température de cette dernière de manière que la température de la matière s'écoulant dans les conduits 60.1 et 60.2 au niveau du module aval considéré soit ajustée, par exemple abaissée ou maintenue constante. Bien entendu, chacun des modules aval 32 à 35 comporte à la fois une ou plusieurs arrivées de fluide thermorégulateur, qui permettent d'alimenter les passages 71 avec du fluide thermorégulateur ayant une température contrôlée, et une ou plusieurs sorties de fluide thermorégulateur, qui permettent d'évacuer le fluide thermorégulateur depuis les passages 71. Suivant une disposition avantageuse, les passages 71 s'étendent parallèlement à l'axe X-X sur l'essentiel, voire la totalité de l'étendue axiale du module aval considéré pour permettre d'appliquer un profil de température le long des parties respectives des conduits 60.1 et 60.2, délimitées par le module aval concerné. Suivant une autre disposition avantageuse, potentiellement cumulable avec la disposition précédente, les modules aval 32 à 35 et/ou les blocs de chaque module, tels que les blocs 32a, 32b, 32c et 32d du module 32, sont thermorégulés de manière indépendante les uns des autres.

La forme de réalisation qui vient d'être décrite en lien avec les passages 71 n'est qu'une possibilité de réalisation pour, plus généralement, une partie 72 des moyens de thermorégulation 70, qui est intégrée aux modules aval 32 à 35 et qui permet de commander la température de paroi des conduits 60.1 et 60.2.

De plus, toujours dans le cadre de la description de l'exemple des moyens de thermorégulation 70 illustré aux figures, le module amont 31 est pourvu de passages 73 pour la circulation d'un fluide thermorégulateur, par exemple de l'eau sous pression. Comme bien visible sur les figures 5 à 7, les passages 73 sont situés dans la paroi des branches 50.1 et 50.2 et dans la paroi du canal 40, en étant par exemple intégrés directement dans les éléments 31c, 31b et 31a du module amont 31. Les passages 73 permettent de faire circuler un fluide thermorégulateur qui, par échange thermique avec la paroi des branches 50.1 et 50.2 et avec la paroi du canal 40, commande la température de ces parois de manière que la température de la matière s'écoulant dans le canal 40 et dans les branches 50.1 et 50.2 soit ajustée, par exemple abaissée ou maintenue constante. Bien entendu, suivant des considérations similaires à celles indiquées plus haut pour les passages 71, le module amont 31 comporte une ou plusieurs arrivées de fluide thermorégulateur pour alimenter les passages 73, ainsi qu'une ou plusieurs sorties de fluide thermorégulateur pour évacuer le fluide thermorégulateur depuis les passages 73. Suivant une disposition avantageuse, au niveau des branches 50.1 et 50.2, les passages 73 s'étendent parallèlement aux branches 50.1 et 50.2 sur l'essentiel, voire la totalité de l'étendue axiale des branches pour permettre d'appliquer un profil de température le long des branches 50.1 et 50.2. De même, au niveau du canal 40, les passages 73 s'étendent parallèlement au canal 40 sur l'essentiel, voire la totalité de l'étendue axiale du canal pour permettre d'appliquer un profil de température le long du canal 40. Suivant une autre disposition avantageuse, potentiellement cumulable avec ce qui précède, les éléments 31a, 31b et 31c du module amont 31 sont thermorégulés de manière indépendante l'un de l'autre.

Bien entendu, la forme de réalisation qui vient d'être décrite en lien avec les passages 73 n'est qu'une possibilité de réalisation pour, plus généralement, une partie 74 des moyens de thermorégulation 70, qui est intégrée au module amont 31 et qui permet de commander la température de paroi des branches 50.1 et 50.2 et la température de paroi du canal 40.

Par ailleurs, la machine d'extrusion 2 est avantageusement associée à un outil de convoyage 80 qui, comme bien visible sur les figures 1 et 2, est disposé sur le côté aval 30B de la filière 30. Cet outil de convoyage 80 est conçu pour transporter individuellement les deux flux de produit 1.1 et 1.2 sortant de la filière 30. En pratique, la forme de réalisation de l'outil de convoyage 80 n'est pas limitative du moment que cet outil de convoyage comprend deux éléments de transport, tels que des tapis convoyeurs, qui agissent respectivement sur les flux de produit 1.1 et 1.2 de manière à transporter chaque flux de produit indépendamment de l'autre flux de produit, typiquement vers un post-traitement. On comprend que cet outil de convoyage 80 met à profit le fait que les conduits 60.1 et 60.2 de la filière 30 débouchent de manière distincte sur le côté aval 30B de la filière.

On va maintenant décrire le fonctionnement de la machine d'extrusion 2.

Les ingrédients de la matière première 3 sont introduits à l'intérieur du fourreau 10, via au moins l'un de ses éléments 11, puis sont entraînés vers l'aval par les vis 20, tout en étant transformés sous l'effet du traitement thermomécanique appliqué par le fourreau et les vis. La matière 4 sortant de l'élément le plus en aval, parmi les éléments 11, du fourreau 10 est poussée à travers successivement la plaque terminale 13 et la filière 30. La matière 4 entre dans la filière 30 par le canal 40 dans lequel elle s'écoule depuis l'extrémité amont 40A jusqu'à l'extrémité aval 40B où elle atteint les extrémités amont 50.1A et 50.2A des branches 50.1 et 50.2. La matière est alors répartie en deux flux de matière distincts qui s'écoulent respectivement dans les branches 50.1 et 50.2, depuis leur extrémité amont 50.1A et 50.2A jusqu'à leur extrémité aval 50.1B et 50.2B. Les deux flux de matière atteignent alors respectivement les conduits 60.1 et 60.2, en y progressant de leur extrémité amont 60.1A et 60.2A jusqu'à leur extrémité aval 60.1B et 60.2B. Ainsi, la progression de la matière dans les conduits 60.1 et 60.2 jusqu'au côté aval 30B de la filière 30 résulte de la poussée de la matière à travers la filière depuis le côté amont 30A de la filière. Les deux flux de matière atteignent alors le côté aval 30B de la filière 30, où ces deux flux de matière sortent des conduits 60.1 et 60.2 sous forme des deux flux de produit 1.1 et 1.2 constituant le produit alimentaire 1. Ces deux flux de produit 1.1 et 1.2 sont individuellement pris en charge par l'outil de convoyage 80.

Grâce à la rectitude et, avantageusement, à la faible inclinaison des branches 50.1 et 50.2, ainsi que grâce à la thermorégulation de la paroi du canal 40 et de la paroi des branches 50.1 et 50.2, la formation et l'écoulement, au sein de la filière 30, des deux flux de matière envoyés dans les conduits 60.1 et 60.2 sont maîtrisés, y compris à fort débit de matière, en évitant notamment des pertes de charge et des perturbations d'écoulement qui risqueraient d'induire un comportement incontrôlé de la matière eu égard à sa viscosité. En particulier, malgré l'étendue axiale non négligeable des branches 50.1 et 50.2, liée à leur rectitude et à leur faible inclinaison, la partie 74 des moyens de thermorégulation 70 permet de limiter l'effet de peau entre la paroi des branches 50.1 et 50.2 et la matière s'écoulant dans ces branches. Il en résulte que la fibration des flux de matière s'écoulant dans les conduits 60.1 et 60.2 est alors pilotable de manière fine, efficace et reproductible, notamment grâce à la thermorégulation de la paroi de ces conduits 60.1 et 60.2.

Divers aménagements et variantes à la machine d'extrusion 2 décrite jusqu'ici sont par ailleurs envisageables. A titre d'exemples, on liste ci-après divers aspects correspondants, qui peuvent être considérés isolément avec ce qui précède ou bien en combinaison entre eux :
- Le nombre de modules aval 32 à 35 n'est pas limité à quatre mais peut être inférieur à quatre, voire égal à un, ou au contraire être supérieur à quatre.
- Plutôt que d'être réalisée sous forme modulaire comme avec les modules amont 31 et aval 32 à 35, la filière 30 peut être conçue sous forme d'un corps d'ensemble, non modulaire, qui délimite successivement le canal 40, les branches 50.1 et 50.2 et les conduits 60.1 et 60.2 et qui intègre les parties 72 et 74 des moyens de thermorégulation 70. En pratique, un tel corps d'ensemble inclut plusieurs pièces assemblées fixement les unes aux autres.
- En sortie du fourreau 10 et/ou en entrée de la filière 30, une grille de diffusion peut être placée sur l'écoulement de la matière 4. Un exemple d'une telle grille de diffusion est visible sur les figures 4, 5 et 9 sous la référence 90. Ceci étant, la présence d'une telle grille de diffusion n'est pas indispensable, ce qui revient à dire que, dans l'exemple envisagé aux figures, la grille de diffusion 90 peut être retirée au profit d'un diaphragme totalement ouvert.
- La plaque terminale 13 peut être thermorégulée de manière à commander la température de paroi de l'alésage 15, et ce grâce à des aménagements similaires à ceux décrits plus haut pour le module amont 31.
- Dans l'exemple illustré aux figures, l'axe X-X s'étend à l'horizontale et le plan géométrique π s'étend à la verticale, de sorte que les flux de produit 1.1 et 1.2 sortent de la filière 30 l'un au-dessus de l'autre suivant la verticale. En alternative, tout en maintenant horizontal l'axe X-X, le plan géométrique π peut être prévu pour s'étendre à l'horizontale, les flux de produit 1.1 et 1.2 sortant alors de la filière 30 à une même hauteur verticale, mais horizontalement côte à côte.

## Revendications

1. Filière (30) pour l'extrusion d'une matière riche en protéines et en eau, laquelle filière (30) définit un axe de filière (X-X) et présente deux côtés opposés suivant l'axe de filière, à savoir un côté amont (30A) par lequel la matière entre dans la filière et un côté aval (30B) par lequel la matière sort de la filière,
laquelle filière (30) délimite successivement suivant la direction de l'axe de filière (X-X) :
- un canal (40) qui s'étend de manière centrée sur l'axe de filière (X-X) depuis une extrémité amont (40A), débouchant sur le côté amont (30A) de la filière, jusqu'à une extrémité aval (40B),
- deux branches (50.1, 50.2), qui s'étendent de part et d'autre de l'axe de filière (X-X) en divergeant l'une de l'autre depuis des extrémités amont respectives (50.1A, 50.2A), axialement aboutées à l'extrémité aval (40B) du canal (40), jusqu'à des extrémités aval respectives (50.1B, 50.2B), chacune des branches s'étendant de manière sensiblement rectiligne de son extrémité amont jusqu'à son extrémité aval, et
- deux conduits (60.1, 60.2), qui s'étendent de part et d'autre et de manière sensiblement parallèle à l'axe de filière (X-X) depuis des extrémités amont respectives (60.1A, 60.2A), aboutées respectivement aux extrémités aval (50.1B, 50.2B) des branches (50.1, 50.2), jusqu'à des extrémités aval respectives (60.1B, 60.2B), débouchant sur le côté aval (30B) de la filière, chacun des conduits (60.1, 60.2) ayant une section, dans un plan perpendiculaire à l'axe de filière (X-X), qui est constante entre les extrémités amont (60.1A, 60.2A) et aval (60.1B, 60.2B) du conduit,
de manière que, lorsque la matière est poussée à travers la filière (30) depuis son côté amont, la matière s'écoule dans le canal (40) puis se répartit dans les branches (50.1, 50.2) avant d'atteindre les conduits (60.1, 60.2) dans lesquels, sous l'effet de la poussée de la matière à travers la filière depuis le côté amont de la filière, la matière progresse jusqu'au côté aval de la filière où la matière sort des conduits sous forme de deux flux de produit respectifs (1.1, 1.2),
et laquelle filière (30) est équipée de moyens de thermorégulation (70) adaptés à la fois pour commander la température de paroi des conduits (60.1, 60.2), pour commander la température de paroi des branches (50.1, 50.2) et pour commander la température de paroi du canal (40).

2. Filière suivant la revendication 1, dans laquelle chacune des branches (50.1, 50.2) présente, depuis son extrémité amont (50.1A, 50.2A) jusqu'à son extrémité aval (50.1B, 50.2B), une succession de sections dans des plans respectifs perpendiculaires à l'axe de filière (X-X), lesquelles sections définissent des centres respectifs dont l'union forme un axe de branche (Z50.1, Z50.2) qui est sensiblement rectiligne et qui forme avec l'axe de filière (X-X) un angle (α) inférieur à 30°, de préférence inférieur à 20°, voire de préférence inférieur à 15°.

3. Filière suivant l'une des revendications 1 ou 2, dans laquelle les branches (50.1, 50.2) sont délimitées par :
- des premières surfaces sensiblement planes respectives (51.1, 51.2) de la filière (30), qui sont toutes les deux perpendiculaires à un même plan géométrique (π) contenant l'axe (X-X) et qui sont situées de part et d'autre de l'axe de filière, en étant chacune tournées à l'opposé de l'axe de filière, ces deux premières surfaces sensiblement planes (51.1, 51.2) s'étendant depuis les extrémités amont respectives (50.1A, 50.2A) jusqu'aux extrémités aval respectives (50.1B, 50.2B) des branches (50.1, 50.2) en divergeant l'une de l'autre, notamment de manière symétrique par rapport à l'axe de filière (X-X), et
- des deuxièmes surfaces sensiblement planes respectives (52.1, 52.2) de la filière (30), qui sont toutes les deux perpendiculaires au plan géométrique (π) et qui sont situées de part et d'autre de l'axe de filière (X-X), en étant chacune tournées vers l'axe de filière, ces deux deuxièmes surfaces sensiblement planes (52.1, 52.2) s'étendant depuis les extrémités amont respectives jusqu'aux extrémités aval respectives des branches en divergeant l'une de l'autre, notamment de manière symétrique par rapport à l'axe de filière.

4. Filière suivant la revendication 3, dans laquelle la première surface sensiblement plane (51.1, 51.2) et la deuxième surface sensiblement plane (52.1, 52.2) de chacune des branches (50.1, 50.2) sont sensiblement parallèles l'une à l'autre et sont inclinées par rapport à l'axe de filière (X-X) avec sensiblement un même angle (α) qui est inférieur à 30°, de préférence inférieur à 20°, voire de préférence inférieur à 15°.

5. Filière suivant l'une quelconque des revendications 3 ou 4, dans laquelle la section de chacun des conduits (60.1, 60.2) dans un plan perpendiculaire à l'axe de filière (X-X) présente un contour sensiblement rectangulaire, dont les bords longitudinaux s'étendent de manière sensiblement perpendiculaire au plan géométrique (π) et dont la largeur est comprise entre 4 et 25 mm, de préférence entre 6 et 20 mm.

6. Filière suivant l'une quelconque des revendications précédentes, dans laquelle la section cumulée des branches (50.1, 50.2) dans un plan à la fois perpendiculaire à l'axe de filière (X-X) et situé au niveau des extrémités aval (50.1B, 50.2B) des branches (50.1, 50.2) est égale ou inférieure :
- à la section cumulée des branches en tout plan à la fois perpendiculaire à l'axe de filière et situé en amont des extrémités aval des branches, et
- à la section du canal (40) en tout plan à la fois perpendiculaire à l'axe de filière (X-X) et situé entre les extrémités amont (40A) et aval (40B) du canal.

7. Filière suivant l'une quelconque des revendications précédentes, dans laquelle la filière (30) comporte des modules juxtaposés successivement les uns aux autres suivant l'axe de filière (X-X) depuis le côté amont (30A) jusqu'au côté aval (30B) de la filière, à savoir :
- un module amont (31), qui délimite à la fois le canal (40) et les branches (50.1, 50.2) et qui intègre une première partie (74) des moyens de thermorégulation (70), adaptée pour commander la température de paroi des branches (50.1, 50.2) et la température de paroi du canal (40), et
- un ou plusieurs modules aval (32, 33, 34, 35), qui délimitent les conduits (60.1, 60.2) et qui intègrent une seconde partie (72) des moyens de thermorégulation (70), adaptée pour commander la température de paroi des conduits (60.1, 60.2).

8. Système de préparation en continu d'un produit alimentaire (1) extrudé, comprenant :
- une matière première (3) qui est riche en protéines et en eau,
- un fourreau (10) à l'intérieur duquel est entraînée au moins une vis (20) de manière à appliquer un traitement thermomécanique à la matière première, et
- une filière (30), qui est conforme à l'une quelconque des revendications précédentes et qui est fixée au fourreau de manière que la matière (4) sortant du fourreau est poussée par la ou les vis à travers la filière depuis le côté amont (30A) de la filière.

9. Système suivant la revendication 8, dans lequel le fourreau (10) comporte, à son extrémité aval, une plaque terminale (13) délimitant un alésage (15) traversant, qui est centré sur l'axe de filière (X-X) et qui est abouté à l'extrémité amont (40A) du canal (40) de manière que l'alésage canalise la matière (4) poussée par la ou les vis (20) jusqu'au canal.

10. Système suivant l'une des revendications 8 ou 9, dans lequel le système comporte en outre un outil de convoyage (80), qui est disposé sur le côté aval (30B) de la filière (30) et qui est adapté pour transporter individuellement les deux flux de produit (1.1, 1.2).

## Patentansprüche

1. Düse (30) zum Extrudieren eines protein- und wasserreichen Materials, wobei die Düse (30) eine Düsenachse (X-X) definiert und zwei gegenüberliegende Seiten entlang der Düsenachse aufweist, nämlich eine stromaufwärtige Seite (30A), durch die das Material in die Düse eintritt, und eine stromabwärtige Seite (30B), durch die das Material aus der Düse austritt,
wobei die Düse (30) nacheinander in Richtung der Düsenachse (X-X) Folgendes begrenzt:
- einen Kanal (40), der sich zentriert auf der Düsenachse (X-X) von einem stromaufwärtigen Ende (40A), das an der stromaufwärtigen Seite (30A) der Düse mündet, zu einem stromabwärtigen Ende (40B) erstreckt,
- zwei Zweige (50.1, 50.2), die sich auf beiden Seiten der Düsenachse (X-X) erstrecken, indem sie von jeweiligen stromaufwärtigen Enden (50.1A, 50.2A), die axial mit dem stromabwärtigen Ende (40B) des Kanals (40) verbunden sind, zu jeweiligen stromabwärtigen Enden (50.1B, 50.2B) divergieren, wobei sich jeder der Zweige im Wesentlichen geradlinig von seinem stromaufwärtigen Ende zu seinem stromabwärtigen Ende erstreckt, und
- zwei Leitungen (60.1, 60.2), die sich auf beiden Seiten und im Wesentlichen parallel zu der Düsenachse (X-X) von jeweiligen stromaufwärtigen Enden (60.1A, 60.2A), die jeweils mit den stromabwärtigen Enden (50.1B, 50.2B) der Zweige (50.1, 50.2) verbunden sind, bis zu jeweiligen stromabwärtigen Enden (60.1B, 60.2B) erstrecken, die auf der stromabwärtigen Seite (30B) der Düse münden, jede der Leitungen (60.1, 60.2) in einer Ebene senkrecht zu der Düsenachse (X-X) einen Querschnitt aufweist, der zwischen dem stromaufwärtigen (60.1A, 60.2A) und dem stromabwärtigen Ende (60.1B, 60.2B) der Leitung konstant ist,
sodass, wenn das Material von seiner stromaufwärtigen Seite durch die Düse (30) gedrückt wird, das Material in den Kanal (40) fließt und sich dann in den Zweigen (50.1, 50.2) verteilt, bevor es die Leitungen (60.1, 60.2), in denen das Material durch die Wirkung des Drucks des Materials durch die Düse von der stromaufwärtigen Seite der Düse bis zu der stromabwärtigen Seite der Düse fortschreitet, wo das Material in Form von zwei jeweiligen Produktströmen (1.1, 1.2) aus den Leitungen austritt,
und wobei die Düse (30) mit wärmeregulierenden Einrichtungen (70) ausgestattet ist, die sowohl zum Steuern der Wandtemperatur der Leitungen (60.1, 60.2), zum Steuern der Wandtemperatur der Zweige (50.1, 50.2) als auch zum Steuern der Wandtemperatur des Kanals (40) angepasst sind.

2. Düse nach Anspruch 1, wobei jeder der Zweige (50.1, 50.2) von seinem stromaufwärtigen Ende (50.1A, 50.2A) bis zu seinem stromabwärtigen Ende (50.1B, 50.2B) eine Folge von Abschnitten in jeweiligen Ebenen senkrecht zu der Düsenachse (X-X) aufweist, wobei die Abschnitte jeweilige Mitten definieren, deren Vereinigung eine Zweigachse (Z50.1, Z50.2) bildet, die im Wesentlichen geradlinig ist und die mit der Düsenachse (X-X) einen Winkel (α) von weniger als 30°, vorzugsweise weniger als 20° und bevorzugter weniger als 15°, bildet.

3. Düse nach einem der Ansprüche 1 oder 2, wobei die Zweige (50.1, 50.2) begrenzt sind durch:
- jeweilige erste im Wesentlichen ebene Oberflächen (51.1, 51.2) der Düse (30), die beide senkrecht zu einer gleichen geometrischen Ebene (π) sind, die die Achse (X-X) enthält, und die auf beiden Seiten der Düsenachse liegen, wobei sie jeweils von der Düsenachse weg weisen, wobei diese zwei ersten im Wesentlichen ebenen Oberflächen (51.1, 51.2) sich von den jeweiligen stromaufwärtigen Enden (50.1A, 50.2A) zu den jeweiligen stromabwärtigen Enden (50.1B, 50.2B) der Zweige (50.1, 50.2) erstrecken, indem sie voneinander abweichen, insbesondere symmetrisch in Bezug auf die Düsenachse (X-X), und
- jeweilige zweite im Wesentlichen ebene Flächen (52.1, 52.2) der Düse (30), die beide senkrecht zu der geometrischen Ebene (π) sind und sich zu beiden Seiten der Düsenachse (X-X) befinden, wobei sie jeweils der Düsenachse zugewandt sind, wobei diese zwei zweiten im Wesentlichen ebenen Flächen (52.1, 52.2) sich von den jeweiligen stromaufwärtigen Enden zu den jeweiligen stromabwärtigen Enden der Schenkel erstrecken und dabei voneinander abweichen, insbesondere symmetrisch in Bezug auf die Düsenachse.

4. Düse nach Anspruch 3, wobei die erste im Wesentlichen ebene Fläche (51.1, 51.2) und die zweite im Wesentlichen ebene Fläche (52.1, 52.2) jedes der Zweige (50.1, 50.2) im Wesentlichen parallel zueinander sind und in Bezug auf die Düsenachse (X-X) mit im Wesentlichen demselben Winkel (α) geneigt sind, der weniger als 30°, vorzugsweise weniger als 20° und bevorzugter weniger als 15° ist.

5. Düse nach einem der Ansprüche 3 oder 4, wobei der Querschnitt von jedem der Leitungen (60.1, 60.2) in einer Ebene senkrecht zu der Düsenachse (X-X) eine im Wesentlichen rechteckige Kontur aufweist, deren Längsränder sich im Wesentlichen senkrecht zu der geometrischen Ebene (π) erstrecken und deren Breite zwischen 4 und 25 mm, vorzugsweise zwischen 6 und 20 mm, liegt.

6. Düse nach einem der vorherigen Ansprüche, wobei der kumulierte Querschnitt der Zweige (50.1, 50.2) in einer Ebene, die sowohl senkrecht zu der Düsenachse (X-X) ist und sich auf Höhe der stromabwärtigen Enden (50.1B, 50.2B) der Zweige (50.1, 50.2) befindet, gleich wie oder kleiner ist als:
- der kumulierte Querschnitt der Zweige in jeder Ebene, die sowohl senkrecht zu der Düsenachse ist und sich stromaufwärts von den stromabwärtigen Enden der Zweige ist, und
- der Querschnitt des Kanals (40) in jeder Ebene, die sowohl senkrecht zu der Düsenachse (X-X) ist und sich zwischen dem stromaufwärtigen (40A) und dem stromabwärtigen (40B) Ende des Kanals befindet.

7. Düse nach einem der vorherigen Ansprüche, wobei die Düse (30) Module umfasst, die entlang der Düsenachse (X-X) von der stromaufwärtigen Seite (30A) zu der stromabwärtigen Seite (30B) der Düse nacheinander nebeneinander angeordnet sind, nämlich:
- ein stromaufwärtiges Modul (31), das sowohl den Kanal (40) als auch die Zweige (50.1, 50.2) begrenzt und das einen ersten Teil (74) der wärmeregulierenden Einrichtungen (70) integriert, die angepasst sind, um die Wandtemperatur der Zweige (50.1, 50.2) und die Wandtemperatur des Kanals (40) zu steuern, und
- ein oder mehrere stromabwärtige Module (32, 33, 34, 35), die die Leitungen (60.1, 60.2) begrenzen und einen zweiten Teil (72) der wärmeregulierenden Einrichtungen (70) integrieren, die angepasst sind, um die Wandtemperatur der Leitungen (60.1, 60.2) zu steuern.

8. System zur kontinuierlichen Herstellung eines extrudierten Nahrungsmittels (1), umfassend:
- ein Rohmaterial (3), das reich an Proteinen und Wasser ist,
- eine Hülse (10), in deren Innern mindestens eine Schnecke (20) angetrieben wird, um das Rohmaterial einer thermomechanischen Behandlung zu unterziehen, und
- eine Düse (30), die einem der vorherigen Ansprüche entspricht und die an der Hülse befestigt ist, sodass das aus der Hülse austretende Material (4) von der oder den Schnecken von der stromaufwärtigen Seite (30A) der Düse durch die Düse gedrückt wird.

9. System nach Anspruch 8, wobei die Hülse (10) an ihrem stromabwärtigen Ende eine Endplatte (13) aufweist, die eine Durchgangsbohrung (15) begrenzt, die auf der Düsenachse (X-X) zentriert ist und mit dem stromaufwärtigen Ende (40A) des Kanals (40) verbunden ist, sodass die Bohrung das von der oder den Schnecken (20) gedrückte Material (4) bis zu dem Kanal kanalisiert.

10. System nach einem der Ansprüche 8 oder 9, wobei das System ferner ein Förderwerkzeug (80) umfasst, das an der stromabwärtigen Seite (30B) der Düse (30) angeordnet ist und angepasst ist, um die zwei Produktströme (1.1, 1.2) einzeln zu fördern.

## Claims

1. A nozzle (30) for extruding a material rich in proteins and water,
which nozzle (30) defines an axis (X-X) of the nozzle and presents two opposite sides according to the axis of the nozzle, namely an upstream side (30A) through which the material enters the nozzle and a downstream side (30B) through which the material leaves the nozzle,
which nozzle (30) delimits successively according to the direction of the axis (X-X) of the nozzle:
- a channel (40) which extends in a manner centered on the axis (X-X) of the nozzle from an upstream end (40A), opening onto the upstream side (30A) of the nozzle, to a downstream end (40B),
- two branches (50.1, 50.2), which extend on either side of the axis (X-X) of the nozzle, diverging from each other, from the respective upstream ends (50.1A, 50.2A), axially abutting the downstream end (40B) of the channel (40), to the respective downstream ends (50.1B, 50.2B), each of the branches extending substantially in a straight line from its upstream end to its downstream end, and
- two ducts (60.1, 60.2), which extend on either side of and in a manner substantially parallel to the axis (X-X) of the nozzle from respective upstream ends (60.1A, 60.2A), abutting respectively the downstream ends (50.1B, 50.2B) of the branches (50.1, 50.2), to respective downstream ends (60.1B, 60.2B), opening onto the downstream side (30B) of the nozzle, each of the ducts (60.1, 60.2) having a cross-section, in a plane perpendicular to the axis (X-X) of the nozzle, which is constant between the upstream ends (60.1A, 60.2A) and the downstream ends (60.1B, 60.2B) of the duct,
in such a manner that, when the material is pushed through the nozzle (30) from its upstream side, the material flows into the channel (40) and is then distributed in the branches (50.1, 50.2) before reaching the ducts (60.1, 60. 2) wherein, under the effect of the material being pushed through the nozzle from the upstream side of the nozzle, the material progresses to the downstream side of the nozzle where the material leaves the ducts in the form of two respective product streams (1.1, 1.2),
and which nozzle (30) is equipped with temperature control means (70) able to control the wall temperature of the ducts (60.1, 60.2), to control the wall temperature of the branches (50.1, 50.2) and to control the wall temperature of the channel (40) all at the same time.

2. The nozzle according to claim 1, wherein each of the branches (50.1, 50.2) presents, from its upstream end (50.1A, 50.2A) to its downstream end (50.1B, 50.2B), a succession of sections in respective planes perpendicular to the axis (X-X) of the nozzle, which sections define respective centers the union of which forms an axis (Z50.1, Z50.2) of the branch, which is substantially straight and forms with the axis (X-X) of the nozzle an angle (α) of less than 30°, preferably less than 20°, even more preferably less than 15°.

3. The nozzle according to one of claims 1 or 2, wherein the branches (50.1, 50.2) are delimited by:
- respective substantially flat first surfaces (51.1, 51.2) of the nozzle (30), which are both perpendicular to the same geometric plane (π) containing the axis (X-X) and which are located on either side of the axis of the nozzle, each being turned away from the axis of the nozzle, these two substantially flat first surfaces (51.1, 51.2) extend from the respective upstream ends (50.1A, 50.2A) to the respective downstream ends (50.1B, 50.2B) of the branches (50.1, 50.2), diverging from one another, notably, in a symmetrical manner relative to the axis (X-X) of the nozzle, and
- respective substantially flat second surfaces (52.1, 52.2) of the nozzle (30), which are both perpendicular to the geometrical plane (π) and are located on either side of the axis (X-X) of the nozzle, each being turned toward the axis of the nozzle, these two substantially flat second surfaces (52.1, 52.2) extend from the respective upstream ends to the respective downstream ends of the branches, diverging from one another, notably in a symmetrical manner relative to the axis of the nozzle.

4. The nozzle according to claim 3, wherein the substantially flat first surface (51.1, 51.2) and the substantially flat second surface (52.1, 52.2) of each of the branches (50.1, 50.2) are substantially parallel to each other and are inclined relative to the axis (X-X) of the nozzle at substantially the same angle (α) which is less than 30°, preferably less than 20°, even more preferably less than 15°.

5. The nozzle according to any one of claims 3 or 4, wherein the section of each of the ducts (60.1, 60.2) in a plane perpendicular to the axis (X-X) of the nozzle presents a substantially rectangular outline, the longitudinal edges of which extend in a manner substantially perpendicular to the geometric plane (π) and the width of which is between 4 and 25 mm, preferably between 6 and 20 mm.

6. The nozzle according to any one of the preceding claims, wherein the cumulative section of the branches (50.1, 50.2) in a plane both perpendicular to the axis (X-X) of the nozzle and located at the downstream ends (50.1B, 50.2B) of the branches (50.1, 50.2) is equal to or less than:
- the cumulative section of the branches in any plane both perpendicular to the axis of the nozzle and located upstream of the downstream ends of the branches, and
- the section of the channel (40) in any plane both perpendicular to the axis (X-X) of the nozzle and located between the upstream ends (40A) and the downstream ends (40B) of the channel.

7. The nozzle according to any one of the preceding claims, wherein the nozzle (30) includes modules juxtaposed successively to one another according to the axis (X-X) of the nozzle from the upstream side (30A) to the downstream side (30B) of the nozzle, namely:
- an upstream module (31), which delimits both the channel (40) and the branches (50.1, 50.2) and incorporates a first portion (74) of the temperature control means (70), able to control the wall temperature of the branches (50.1, 50.2) and the wall temperature of the channel (40), and
- one or more downstream modules (32, 33, 34, 35), which delimit the ducts (60.1, 60.2) and incorporate a second portion (72) of the temperature control means (70), able to control the wall temperature of the ducts (60.1, 60.2).

8. A system for the continuous preparation of an extruded food product (1), comprising:
- a raw material (3) which is rich in protein and water,
- a barrel (10) inside which at least one screw (20) is driven in such a manner as to apply a thermomechanical treatment to the raw material, and
- a nozzle (30), which is in accordance with any of the preceding claims and which is attached to the barrel in such a manner that the material (4) leaving the barrel is pushed by the screw or screws through the nozzle from the upstream side (30A) of the nozzle.

9. The system according to claim 8, wherein the barrel (10) includes, at its downstream end, an end plate (13) delimiting a through bore (15) which is centered on the axis (X-X) of the nozzle and which abuts the upstream end (40A) of the channel (40) in such a manner that the bore directs the material (4) pushed by the screw or screws (20) toward the channel.

10. The system according to one of claims 8 or 9, wherein the system further includes a conveying tool (80), which is arranged on the downstream side (30B) of the nozzle (30) and is able to convey the two product streams (1.1, 1.2) individually.
